# EUROPEAN PATENT APPLICATION

(11) **EP 4 726 541 A1**
(43) Date of publication of application: **15.04.2026**
(21) Application number: 24841971.5
(22) Date of filing: 01.04.2024
(51) Int. Cl.: G06F 9/451

(54) **NON-INTEGRATED SINGLE-ENGINE BACKGROUND RENDERING METHOD, SYSTEM AND DEVICE FOR MULTIPLE APPLICATIONS**

(30) Priority: 14.07.2023 CN 202310870965
(71) Applicant: You San Di Technology (Shanghai) Co., Ltd., Shanghai 201306 (CN)
(72) Inventor: GUO, Qing, Shanghai 201306 (CN); LIU, Weixian, Shanghai 201306 (CN); CHEN, Jianpeng, Shanghai 201306 (CN)
(74) Representative: Prinz & Partner mbB
(86) International application number: PCT/CN2024/085290
(87) International publication number: WO 2025/015971

(57) **Abstract**

Provided is non-integrated single-engine background rendering method for multiple applications. The method includes that: a single engine provides creation of an off-screen rendering buffer and off-screen rendering, to enable the single engine to normally run an entire rendering process of the single engine and generate a rendered image without relying on an external on-screen rendering buffer; rendering outputs for multiple Views are is provided and processing of input clicks is isolated; a universal View component is abstracted; a cross-process communication mechanism is provided and a universal protocol is defined; a rendering service library is provided; and one-click packaging and project generation are performed.

## Description

The present application claims priority to Chinese Patent Application No. 202310870965.5, filed with the China National Intellectual Property Administration (CNIPA) on Jul. 14, 2023, the disclosure of which is incorporated herein by reference in its entirety.

### TECHNICAL FIELD

The present application relates to the field of computers, for example, a non-integrated single-engine background rendering method, system, and device for multiple applications.

### BACKGROUND

In the context of in-vehicle human machine interface (HMI) in the automotive industry, for stability purposes, multiple application functions are split into independent application programs. This ensures that other functions will not be affected after some application functions exit abnormally. When these multiple independent application programs all need to integrate an engine to obtain 3D rendering capabilities, the conventional practice is for each application to integrate the engine individually. This results in the coexistence of multiple engine instances during the running of these applications, which consumes an excessive amount of system resources. Therefore, a problem to be addressed is how to eliminate the need for each of multiple applications to integrate the engine individually, and to achieve high efficiency and reduced resource consumption while ensuring stability.

### SUMMARY

The present application provides a non-integrated single-engine background rendering method for multiple applications. The method includes that: a single engine provides creation of an off-screen rendering buffer and off-screen rendering, to enable the single engine to normally run an entire rendering process of the single engine and generate a rendered image without relying on an external on-screen rendering buffer; rendering outputs for multiple Views are provided and processing of input clicks is isolated; a universal View component is abstracted; a cross-process communication mechanism is provided and a universal protocol is defined; a rendering service library is provided; and one-click packaging and project generation are performed.

The present application further provides a computer-readable storage medium. The computer-readable storage medium stores a computer program. The computer program, when executed by a processor, performs the non-integrated single-engine background rendering method for the multiple applications.

The present application further provides a non-integrated single-engine background rendering device for multiple applications. The device includes a memory and a processor. The memory is configured to store a software application program. The processor is configured to execute the software application program. The software application program is configured to correspondingly perform the non-integrated single-engine background rendering method for the multiple applications.

The present application further provides a non-integrated single-engine background rendering system for multiple applications. The system includes a background service system and multiple foreground application systems. The background service system is configured to package a single engine and a 3D scene, output 3D content to multiple foreground application systems through cross-process communication between applications, and receive an instruction and execute logic corresponding to the instruction. The single engine of the background service system is configured to support creation of an off-screen rendering buffer and off-screen rendering, to enable the single engine to normally run an entire rendering process of the single engine and generate a rendered image without relying on an external on-screen rendering buffer. The background service system is further configured to provide rendering outputs for multiple Views and isolate processing of input clicks.

### BRIEF DESCRIPTION OF THE DRAWINGS

FIG. 1 is an architecture diagram of a non-integrated single-engine background rendering system for multiple applications according to an embodiment of the present application;
FIG. 2 is a schematic diagram showing a configuration interface of a non-integrated single-engine background rendering system for multiple applications according to an embodiment of the present application;
FIG. 3 is a schematic diagram showing another configuration interface of a non-integrated single-engine background rendering system for multiple applications according to an embodiment of the present application;
FIG. 4 is a schematic diagram showing another configuration interface of a non-integrated single-engine background rendering system for multiple applications according to an embodiment of the present application; and
FIG. 5 is a schematic diagram showing another configuration interface of a non-integrated single-engine background rendering system for multiple applications according to an embodiment of the present application.

### DETAILED DESCRIPTION

The following description serves to disclose the present application to enable those skilled in the art to implement the present application. Embodiments in the following description are provided by way of example only.

The term "a" should be understood to mean "at least one" or "one or more", that is, in one embodiment, the number of elements may be one, and in further embodiments, the number of elements may be multiple.

The present application is an application relating to computer programs. In order to address the problems proposed in the present application, a solution is set forth based on a computer program processing flow. In this solution, a computer executes a computer program compiled in accordance with the above-described flow to control or process external or internal objects of the computer. By means of a non-integrated single-engine background rendering method for multiple applications in the present application, a single engine and a 3D scene are packaged into one background service application; by means of cross-process communication between applications, other applications are enabled to output 3D content, receive an instruction, and execute logic corresponding to the instruction.

In the embodiments of the non-integrated single-engine background rendering method for the multiple applications in the present application, the single engine is described by using a single Unity engine as an example; the single engine may also be other types of single engines, and the present application is provided solely by way of example in this respect.

In the embodiments of the non-integrated single-engine background rendering method for the multiple applications in the present application, an off-screen rendering buffer is implemented as a PBuffer surface; the off-screen rendering buffer may also be implemented as other types, and the present application is provided solely by way of example in this respect.

In the embodiments of the non-integrated single-engine background rendering method for the multiple applications in the present application, the multiple applications are implemented as multiple Android applications, the multiple applications may also be implemented as other types, and the present application is provided solely by way of example in this respect.

The non-integrated single-engine background rendering method for the multiple applications includes the following steps.

In S100, a single engine, such as a Unity engine, provides creation of a PBuffer Surface and off-screen rendering, to enable the single engine to normally run an entire rendering process of the single engine and generate a rendered image without relying on an external on-screen Surface.

In S200, rendering outputs for multiple Views are provided, and processing of input clicks is isolated.

The camera is used as the carrier of the output, and an isolation method in units of Scene is introduced to ensure that the single engine may correctly respond to the input clicks and convey them to logical scripts. Moreover, the unity graphical user interface (UGUI) is also modified accordingly to ensure the correctness of UI input clicks in the case of multiple Views.

In S300, a universal UnityView component is abstracted.

In S400, a cross-process communication mechanism is provided, and a universal protocol is defined.

In S500, a rendering service library is provided, for example, a universal Android module unity rendering service library is provided.

In S600, one-click packaging and project generation are performed. An option for cross-process export is newly added. By simply checking this option, a target platform development project (such as an Android project) corresponding to cross-process rendering may be exported, and then this option is disabled, so as not to affect the export of an ordinary Android project.

In the embodiments of the non-integrated single-engine background rendering method for the multiple applications in the present application, the target platform development project is implemented as the Android project; alternatively, the target platform development project may also be implemented as other types, and the present application is provided solely by way of example in this respect.

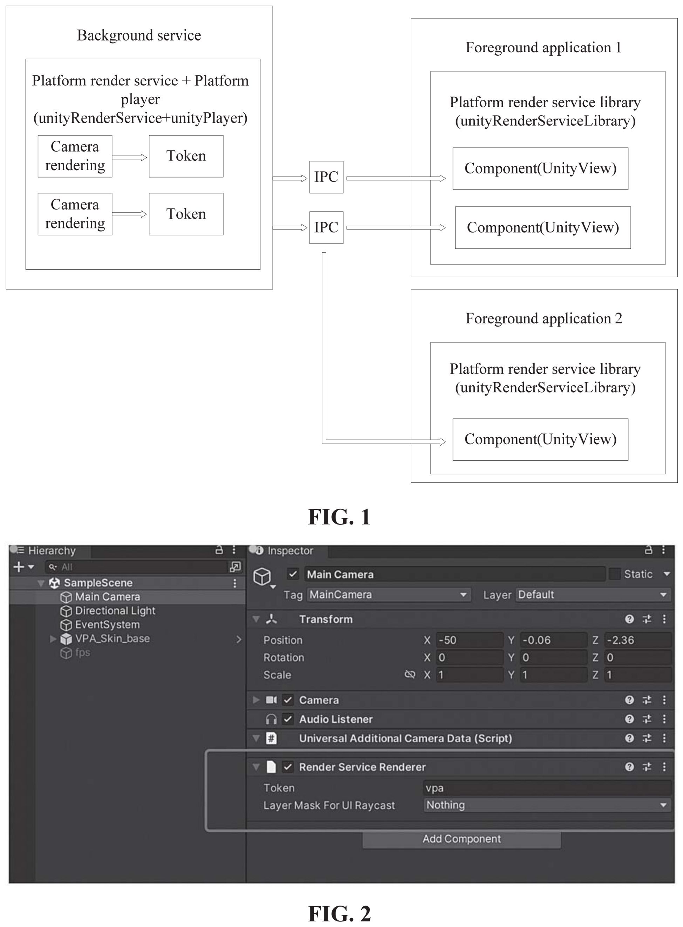

In the overall architecture diagram shown in FIG. 1, a background service (such as a unityService background service) interacts with a foreground application 1 and a foreground application 2 through cross-process communication or inter-process communication (IPC).

In the public version of the Unity engine, Unity only supports on-screen rendering, thereby requiring the external party to provide one on-screen Surface (rendering buffer) for the Unity engine to perform rendering, and its rendered images must be output within a control. Through the improvement of the step S100, it is possible to normally run the entire rendering process of the engine and generate the rendered image without relying on the external on-screen Surface.

In step S200, the corresponding modifications are implemented, in the embodiments, as isolating the click event processing function of unity UGUI and making a corresponding response.

The component in the step S300 is configured to undertake a 3D image rendered by the Unity engine in an off-screen manner, associate with a rendered output image within the Unity engine through a Token, and support the IPC for communicating with the Unity engine.

The UnityView component is a universal component abstraction in an Android layer. The UnityView component is configured to perform life cycle management internally, synchronize size changes of the UnityView component with a rendering output of a Unity engine, respond to multiple input and gesture events, synchronize the Unity engine to perform logical processing, and support independent control of a rendering frequency. The UnityView, as a universal component of the Android layer, can be easily and conveniently embedded into multiple native Android applications.

In the step S400, a protocol for communication between the native Application (APP) and the unityService background service is established. The unityService background service may transmit a 3D content image output by the camera to the native APP by means of the protocol, and the native APP may also send an instruction to the unityService to cause the engine to execute logic.

The conventional unity Android project mainly includes two modules, i.e., a launcher module and a unityLibrary module. The native APP needs to copy the unityLibrary module to the project. This module contains an engine scene package content and takes up a relatively large space. Once changes are made to the 3D scene, the native APP needs to copy the unityLibrary module again. Through the step S500, a universal Android module unity render service library is newly added on the original basis. This module is relatively lightweight, only contains a universal interface protocol, does not contain complex scene content, and the native APP only needs to be integrated once.

In the embodiments of the present application, as shown in FIG. 2, the non-integrated single-engine background rendering method for the multiple applications further includes the following steps: a 3D scene is built in a unity engine editor, then the abstract and universal UnityView component, i.e., render service renderer, in the step S300 is added to a scene camera, and the token is set as a unique identifier.

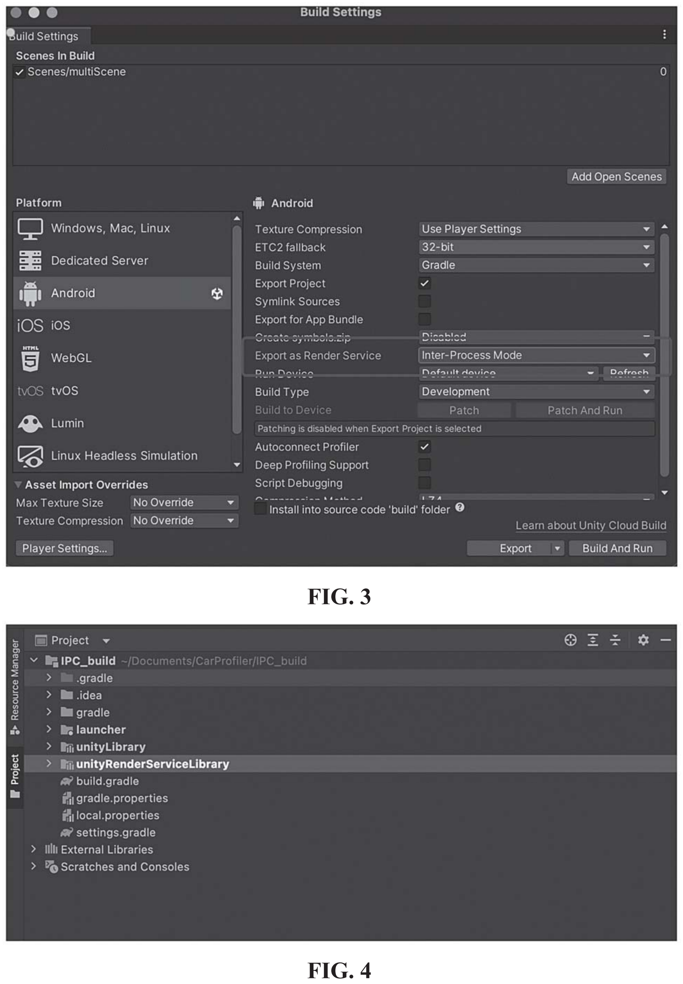

As shown in FIG. 3, the non-integrated single-engine background rendering method for the multiple applications further includes the following steps: in the Unity engine editor, the built 3D scene is exported as the Android project; then, in the Export as Render Service option section, the Inter-Process Mode is invoked.

As shown in FIG. 4, the non-integrated single-engine background rendering method for the multiple applications further includes the following steps: a target platform integrated development environment (IDE) is invoked. For example, when Android Studio is invoked to open the Android project exported in the foregoing steps and the Android project is installed on an electronic device such as a mobile phone or an in-vehicle terminal, the auto-start permission of the application is enabled.

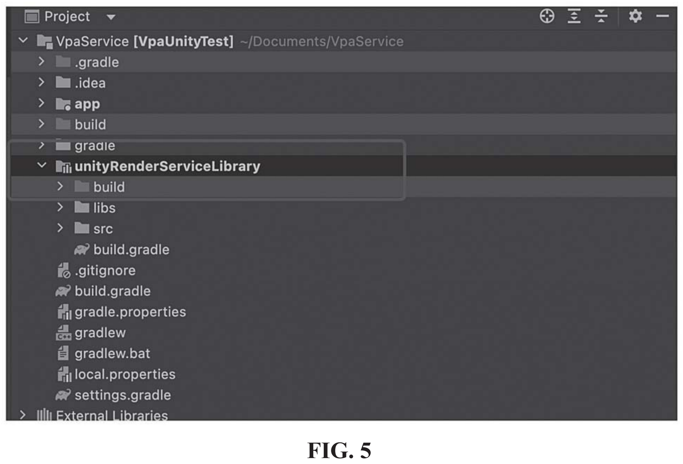

As shown in FIG. 5, the non-integrated single-engine background rendering method for the multiple applications further includes the following steps: a unity rendering service library is invoked, and the unity rendering service library is embedded into the native APP.

The non-integrated single-engine background rendering method for the multiple applications further includes the following steps: a UnityView class provided in the unity rendering service library is invoked, and the token attribute is set to the token as the unique identifier configured in the foregoing steps, so that the view can render 3D content into the native APP. Its corresponding code is as follows:

```
              Var UnityView = UnityView (vpaContainer.context, attrs: null);
               unityView.init (buildingToken: "vpa", renderFrameIntral: 1);
               vpaContainer.addView (unityView);
```

the unity Render Service binds different 3D scenes to different Unity Views through the tokens and outputs rendering results for them. Moreover, the native APP may also send events to the unity Render Service through UnityView for the inter-process communication.

The non-integrated single-engine background rendering method for the multiple applications described in the present application, in this embodiment, the Unity engine is decoupled from the binding of Android Activity and implements the off-screen rendering; the Unity engine is integrated into the Android application without enforcing full-screen rendering; a Unity Render Service is newly added as an independent background rendering service; an independent Unity Render Service code library is provided for quick integration by other Android applications, a service invocation interface and an inter-process communication interface are provided, and moreover, a UI component of UnityView is provided for easy integration into the Android application; and the Android application may start the background service such as the Unity Render Service, receive a rendering result, and send click events and the like to perform the inter-process communication with the Unity Render Service.

The non-integrated single-engine background rendering method for the multiple applications described in the present application may, based on a cross-process rendering service, use the single engine as the background rendering service and render images for the multiple applications. This enables the multiple applications to obtain universal capabilities of all engines without integrating the engine into their own applications. It facilitates quick access for app developers, features good encapsulation, and requires only a small amount of code from developers; supports the off-screen rendering and may output multiple images simultaneously; and starts only one engine instance, thereby avoiding memory overhead caused by multiple engine instances.

It is to be understood by those skilled in the art that the embodiments of the present application may be provided in the form of a method, a system, or a computer program product. Therefore, the present application may take the form of an entirely hardware embodiment, an entirely software embodiment, or an embodiment combining software and hardware aspects. The methods of the present application may be implemented by hardware, software, or a combination of software and hardware. The present application may be implemented in a centralized manner in at least one computer system, or in a distributed manner by different parts across several interconnected computer systems. Any computer system or other device capable of implementing the methods is applicable. A common combination of hardware and software may be a universal-purpose computer system installed with a computer program, where the computer system is controlled by installing and executing the program to operate according to the methods.

The present application may be embodied in the computer program product and may include all features enabling the implementation of the methods described herein. The computer program product is contained in one or more computer-readable storage media having a computer-readable program code embodied therein. According to another aspect of the present application, a computer-readable storage medium is also provided. The computer-readable storage medium stores a computer program, and the computer program, when executed by a processor, may perform the steps of the methods of the present application. The computer storage medium is a medium in the computer memory that is configured to store a non-continuous physical quantity. The computer storage medium includes, but is not limited to, semiconductors, disk storage, magnetic cores, magnetic drums, magnetic tapes, optical disks, non-transitory storage media, and the like. The computer storage medium is not limited to the above-described examples, which are provided merely as illustrations.

Corresponding to the embodiments of the method of the present application, according to another aspect of the present application, a non-integrated single-engine background rendering system for multiple applications is also provided. This system is an application of the non-integrated single-engine background rendering method for the multiple applications in the present application in terms of improvement of the computer program. The system includes a background service system and multiple foreground application systems. The background service system is configured to package an engine such as the unity engine (implemented as unity RenderService) and a 3D scene (implemented as UnityPlayer), and output 3D content to other multiple foreground application systems through the cross-process communication between applications (implemented as IPC), an instruction is received, and corresponding logic is performed.

In the embodiments of the non-integrated single-engine background rendering system for the multiple applications in the present application, the single Unity engine is used as an example for illustration, but the single engine may also be other types of single engines, and the present application is provided solely by way of example in this respect.

In the embodiments of the non-integrated single-engine background rendering system for the multiple applications in the present application, the off-screen rendering buffer is implemented as a PBuffer Surface, but the off-screen rendering buffer may also be implemented as other types, and the present application is provided solely by way of example in this respect.

In the embodiments of the non-integrated single-engine background rendering system for the multiple applications in the present application, the multiple applications are implemented as multiple Android applications, but the multiple applications may also be implemented as other types, and the present application is provided solely by way of example in this respect.

The Unity engine of the background service system is configured to support the creation of a PBuffer Surface and off-screen rendering, to enable the Unity engine to normally run an entire rendering process of the engine and generate a rendered image without relying on an external on-screen Surface.

The background service system further provides rendering outputs for multiple Views and isolates the processing of input clicks. The background service system is provided with a Camera rendering module. The Camera rendering module is configured to serve as a carrier for output. The background service system is provided with a Scene unit isolation module, and the Scene unit isolation module is configured to perform and introduce an isolation method on a per-Scene basis so as to ensure that the engine may correctly respond to input clicks and transmit them to logic scripts. The background service system is provided with a unity UGUI modification module, and the Unity UGUI modification module also makes corresponding modifications to a unity UGUI to ensure the correctness of UI input clicks in the case of multiple Unity Views of multiple foreground application systems.

The background service system is further provided with a UnityView component. The UnityView component is configured to undertake a 3D image rendered by the Unity engine in an off-screen manner, associate with a rendered output image within the Unity engine through the Token, and support the IPC for communicating with the Unity engine. The UnityView component is further configured to perform lifecycle management, synchronize size changes of the UnityView component with a rendering output of the Unity engine, respond to multiple input and gesture events and synchronize the Unity engine to perform logical processing, and support independent control of a rendering frequency.

The background service system is further provided with a background service communication protocol module. The background service communication protocol module is configured to provide a cross-process communication mechanism and define universal protocols, including protocols for communication between a native APP and the UnityService background service. Through these protocols, the unityService background service transmits 3D content image output by the camera to the native APP, and the native APP sends instructions to the UnityService to enable the engine to execute logic.

The background service system is further provided with a rendering service library module. In this embodiment of the present application, the rendering service library module is implemented as a universal Android unity rendering service library module. The universal Android unity rendering service library module includes only a universal interface protocol, so that the native APP needs to integrate it only once.

The non-integrated single-engine background rendering system for the multiple applications is further provided with a one-click packaging and project generation module. The one-click packaging and project generation module is configured to newly add an option for cross-process export in the unity engine. In response to a check-and-invoke instruction, a target platform development project such as an Android project corresponding to the cross-process rendering is exported, and moreover, the option may also be disabled, thereby not affecting the export of an ordinary Android project.

The non-integrated single-engine background rendering system for the multiple applications is further provided with a scene building configuration module. The scene building configuration module is configured to build a 3D scene in the Unity engine editor, add a Render Service Renderer component to a scene camera, and set the token as a unique identifier.

The non-integrated single-engine background rendering system for the multiple applications is further provided with a scene export module. The scene export module is configured to export the built 3D scene as the Android project in the unity engine editor and invoke an Inter-Process Mode.

The non-integrated single-engine background rendering system for the multiple applications is further provided with a target platform integrated development environment module. In the embodiments of the present application, the target platform integrated development environment module is implemented as an Android Studio integrated development module. The Android Studio integrated development module is configured to open the Android project exported by the scene export module, and enable the auto-start permission of the application when it is installed on an electronic device such as a mobile phone or an in-vehicle terminal.

The non-integrated single-engine background rendering system for the multiple applications is further provided with an embedded module. The embedded module is configured to embed the unity rendering service library into the native APP.

The non-integrated single-engine background rendering system for the multiple applications is further provided with an attribute setting module. The attribute setting module is configured to use the UnityView class in the Unity rendering service library and set the token attribute to the token set as the unique identifier in the scene construction and configuration module, so that the View of this class renders 3D content into the native APP.

The Unity Render Service of the non-integrated single-engine background rendering system for the multiple applications in the present application binds different 3D scenes to different Unity Views through tokens and outputs rendering results for them. Moreover, the native APP may also send events to the Unity RenderService through UnityView for the inter-process communication.

Through the architecture and interaction of multiple modules, the non-integrated single-engine background rendering system for the multiple applications in the present application is configured to: decouple the Unity engine from the binding of Android Activity and implement off-screen rendering; integrate the Unity engine into an Android application without enforcing full-screen rendering, modify the Unity Player Runtime to function as an independent background service; provide an independent Unity Render Service code library for quick integration by other Android applications, provide a service invocation interface and an inter-process communication interface, and provide a UnityView UI component for easy integration into Android applications; and enables the Android applications to start the Unity Render Service background service and receive rendering results. Moreover, click events and the like are sent to perform the inter-process communication with the Unity Render Service.

According to another aspect of the present application, a non-integrated single-engine background rendering device for the multiple applications is also provided. The device includes a software application program, a memory for storing the software application program, and a processor configured to execute the software application program. The software application program is capable of correspondingly performing the steps in the non-integrated single-engine background rendering method for the multiple applications in the present application.

A combination of hardware and software may be a universal-purpose computer system with a computer program. The program, when loaded and executed, controls the computer system to perform the non-integrated single-engine background rendering method for the multiple applications disclosed in the present application.

The present application has been described with reference to flowcharts and/or block diagrams of the method, the system, and the computer program product according to the present application. It is apparent that each block in the flowcharts and/or block diagrams, and combinations of blocks in the flowcharts and/or block diagrams, may be implemented by the computer program instruction. These computer program instructions may be provided to a processor of a universal-purpose computer, a special-purpose computer, an embedded processor, or other programmable data processing devices to produce a machine, so that the instructions (executed by the processor of the computer or other programmable data processing devices) create an apparatus for implementing the functions specified in one or more blocks of the flowcharts and/or block diagrams.

## Claims

1. A non-integrated single-engine background rendering method for a plurality of applications, comprising:
providing, by a single engine, creation of an off-screen rendering buffer and off-screen rendering, to enable the single engine to run an entire rendering process of the single engine and generate a rendered image without relying on an external on-screen rendering buffer;
providing rendering outputs for a plurality of Views and isolating processing of input clicks;
abstracting a universal View component;
providing a cross-process communication mechanism and defining a universal protocol;
providing a rendering service library; and
performing one-click packaging and project generation.

2. The non-integrated single-engine background rendering method for the plurality of applications of claim 1, further comprising:
building a three-dimensional, 3D, scene in an engine editor, adding a Render Service Renderer component to a scene camera, and setting a token as a unique identifier.

3. The non-integrated single-engine background rendering method for the plurality of applications of claim 2, further comprising:
exporting a built 3D scene as a target platform development project in the engine editor.

4. The non-integrated single-engine background rendering method for the plurality of applications of claim 3, further comprising:
invoking a target platform integrated development environment to open an exported target platform development project.

5. The non-integrated single-engine background rendering method for the plurality of applications of claim 4, further comprising:
invoking the rendering service library and embedding the rendering service library into a native application, APP.

6. The non-integrated single-engine background rendering method for the plurality of applications of claim 5, further comprising:
invoking a View class provided in the rendering service library, setting a token attribute to a configured token serving as the unique identifier, and rendering 3D content into the native APP.

7. The non-integrated single-engine background rendering method for the plurality of applications of any one of claims 1 to 6, wherein the View component is configured to undertake a 3D image rendered by the single engine in an off-screen manner, associate with a rendered output image within the single engine via a token, and support the cross-process communication mechanism for communication with the single engine.

8. The non-integrated single-engine background rendering method for the plurality of applications of any one of claims 1 to 6, further comprising:
performing, by the View component, lifecycle management, synchronizing size changes of the View component with a rendering output of the single engine, responding to a plurality of input and gesture events and synchronizing the single engine to perform logical processing, and supporting independent control of a rendering frequency.

9. The non-integrated single-engine background rendering method for the plurality of applications of any one of claims 1 to 6, wherein the single engine is a single Unity engine.

10. The non-integrated single-engine background rendering method for the plurality of applications of any one of claims 1 to 6, wherein the plurality of applications comprise Android applications.

11. The non-integrated single-engine background rendering method for the plurality of applications of any one of claims 4 to 6, wherein the target platform development project is an Android project, and the target platform integrated development environment is Android Studio.

12. A computer-readable storage medium, storing a computer program, wherein the computer program, when executed by a processor, performs the non-integrated single-engine background rendering method for the plurality of applications of any one of claims 1 to 11.

13. A non-integrated single-engine background rendering device for the plurality of applications, comprising:
a memory, which is configured to store a software application program; and
a processor, which is configured to perform the software application program, wherein the software application program correspondingly performs the non-integrated single-engine background rendering method for the plurality of applications of any one of claims 1 to 11.

14. A non-integrated single-engine background rendering system for the plurality of applications, comprising a background service system and a plurality of foreground application systems, wherein the background service system is configured to package a single engine and a three-dimensional, 3D, scene, output 3D content for the plurality of foreground application systems through a cross-process communication mechanism between applications, and receive an instruction and execute logic corresponding to the instruction; the single engine of the background service system is configured to support creation of an off-screen rendering buffer and off-screen rendering, to enable the single engine to run an entire rendering process of the single engine, and generate a rendered image without relying on an external on-screen rendering buffer; and the background service system is further configured to provide rendering outputs for a plurality of Views and isolate processing of input clicks.

15. The non-integrated single-engine background rendering system for the plurality of applications of claim 14, wherein the background service system is further provided with a Camera rendering module, a View component, and a background service communication protocol module, the Camera rendering module is configured to serve as a carrier for output; the View component is configured to undertake a 3D image rendered by the single engine in an off-screen manner, associate with a rendered output image within the single engine via a token, and support the cross-process communication mechanism for communication with the single engine; and the background service communication protocol module is configured to provide the cross-process communication mechanism, define a universal protocol, and define a protocol for communication between a native application, APP, and a background service.

16. The non-integrated single-engine background rendering system for the plurality of applications of claim 15, further comprising a rendering service library module, wherein the rendering service library module comprises only a universal interface protocol to enable the native APP to be integrated only once.

17. The non-integrated single-engine background rendering system for the plurality of applications of claim 15, wherein the View component is further configured to: perform lifecycle management, synchronize size changes of the View component with a rendering output of the single engine, respond to a plurality of input and gesture events and synchronize the single engine to perform logical processing, and support independent control of a rendering frequency.

18. The non-integrated single-engine background rendering system for the plurality of applications of claim 15, wherein the background service transmits a 3D content image output by a camera to the native APP, and the native APP sends an instruction to the background service to cause the single engine to execute logic corresponding to the instruction.

19. The non-integrated single-engine background rendering system for the plurality of applications of claim 14, further comprising a one-click packaging and project generation module, wherein the one-click packaging and project generation module is configured to newly add an option for cross-process export in the single engine.

20. The non-integrated single-engine background rendering system for the plurality of applications of any one of claims 14 to 19, further comprising a scene building configuration module, wherein the scene building configuration module is configured to build a 3D scene in an engine editor, add a Render ServiceRenderer component to a scene camera, and set a token as a unique identifier.

21. The non-integrated single-engine background rendering system for the plurality of applications of any one of claims 14 to 19, wherein the single engine is a single Unity engine, and the View component is a UnityView component.

22. The non-integrated single-engine background rendering system for the plurality of applications of any one of claims 14 to 19, wherein the plurality of applications comprise Android applications.
